# EUROPÄISCHE PATENTSCHRIFT

(11) **EP 0 513 499 B1**
(45) Veröffentlichungstag und Bekanntmachung des Hinweises auf die Patenterteilung: **11.06.1997**
(21) Anmeldenummer: 92104832.8
(22) Anmeldetag: 20.03.1992
(51) Int. Cl.: B01J 4/00, B65G 65/46

(54) **Dosiereinrichtung für Schüttgüter und Flüssigkeiten**
Metering device for bulk materials and liquids
Dispositif de dosage pour des matériaux en vrac et pour des liquides

(30) Priorität: 17.05.1991 DE 4116331
(43) Veröffentlichungstag der Anmeldung: 19.11.1992
(73) Patentinhaber: Schenck Process GmbH, 64293 Darmstadt (DE)
(72) Erfinder: Heinrici, Harald, W-6083 Biebesheim (DE); Bachmann, Uwe, W-3500 Kassel (DE); Törner, Ludger, Ing. grad., W-6116 Eppertshausen (DE)

(56) Entgegenhaltungen:
- EP-A- 0 207 303
- CH-A- 386 138
- FR-A- 2 635 314
- HANDLING September 1990, Seite 112; 'AUF DIE RICHTIGE DOSIS'
- WAAGEN HANDBUCH (1953) Produktionsprogramm der Augsberger Waagenfabrik.

## Beschreibung

Die Erfindung betrifft eine Dosiereinrichtung für Schüttgüter u. Flüssigkeiten gemäß dem Oberbegriff des Patentanspruchs 1.

Bei der industriellen Fertigung werden Dosiereinrichtungen für die unterschiedlichsten Schüttgüter verwendet. So kommt es häufig vor, daß bei einem nachfolgenden Produktionsvorgang andere Schüttgüter verwendet werden, die in einer anderen Körnung vorliegen, in einem anderen Mischungsverhältnis verwandt werden oder in einer anderen Vorbehandlung notwendig sind. Bei derartigen Produktions- oder Schüttgutsänderungen ist es zumeist notwendig, die Dosiereinrichtung zu reinigen, Teile des Dosierorgans gegen andere auszutauschen oder aber ein zusätzliches Rührwerk einzusetzen oder abzubauen.

Eine derartige Dosiereinrichtung ist aus der Zeitschrift Handling, September 1990, Seite 112 vorbekannt. Dort ist eine Modular-Differential-Dosierwaage beschrieben, die aus einem Vorratsbehälter mit Vertikalrührwerk und einem schwenkbaren Schneckendosierorgan besteht, die sich über Wägezellen auf einen vierfüßigen Trägerrahmen abstützt. Das Rührwerk ist von oben vertikal im Vorratsbehälter angeordnet und am oberen äußeren Rand des Vorratsbehälters befestigt. Hingegen ist das Dosierorgan über ein Scharnier schwenkbar an der Austragsöffnung des Vorratsbehälters angeordnet und kann zum Zwecke der Reinigung oder zum Austausch der Förderschnecke innerhalb des Rahmenteils seitlich verschwenkt werden. Da das Dosierorgan während des Schwenkvorgangs mit dem Austragsstutzen des Vorratsbehälters verbunden bleibt, kann das Dosierorgan nicht vollständig vom Vorratsbehälter weg bewegt werden, so daß es schwer zugänglich bleibt und daher einen umständlichen Pflege- und Wartungsaufwand erfordert. Sollte darüber hinaus noch der Einsatz eines Doppelschneckenförderers und eines anderen Rührwerks erforderlich sein, so wäre dafür ein erheblicher Montageaufwand notwendig.

Der Erfindung liegt deshalb die Aufgabe zugrunde, eine Dosiereinrichtung zu schaffen, bei der der Pflege- und Umrüstaufwand gering ist und damit in kurzer Zeit durchgeführt werden kann.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Es ist zwar aus dem Waagenhandbuch, Herausgabe 1953, "Produktionsprogramm der Augsburger Waagenfabrik Ludwig Pfister KG Augsburg", Seite 108, 109 eine schwenkbare Silowaage bekannt, bei der an einem Silofuß eine diskontinuierliche Wägeeinrichtung angeordnet ist, deren Wiegebehälter nach dem Füllen seitlich verschwenkbar ist, um dann den Wägebehälter nach dem Öffnen einer Klappe insgesamt in einen Mischerkübel bzw. Vorsilo zu entleeren. Hierbei handelt es sich allerdings nicht um eine Dosiereinrichtung, mit der über ein Dosierorgan in einem kontinuierlichen Vorgang eine vorgegebene Menge Schüttgüter und dergleichen zuführbar sind.

Die Erfindung hat den Vorteil, daß bei Pflege- oder Wartungsmaßnahmen die einzelnen Funktionsorgane der Dosiereinrichtung, an der keine Maßnahmen erforderlich sind, nicht aus ihrer ursprünglichen Einbaulage verändert werden müssen. So ist z. B. der Austausch eines Vorratsbehälters möglich, ohne daß ein vorhandenes Rührwerk oder das Dosierorgan in seiner Einbaulage verändert werden muß.

Da die einzelnen Funktionsorgane der Dosiereinrichtung horizontal unter dem Vorratsbehälter schwenkbar sind, ohne daß dazu eine feste Verbindung der Funktionsorgane untereinander notwendig ist, sind während kurzer Unterbrechungsphasen einzelne Funktionsorgane, wie z. B. ein Rührwerk zusätzlich in den Dosiervorgang einführbar. So können an dem Schwenkrahmen auch gleichzeitig verschiedene Dosierorgange vorgesehen werden, die dann jeweils nach Bedarf kurzzeitig für das vorher verwendete Dosierorgan unter den Vorratsbehälter geschwenkt werden.

Die Verwendung des erfindungsgemäßen Schwenkrahmens hat zusätzlich noch den Vorteil, daß jeweils für die gewünschten Dosierzwecke eine optimale Dosiereinrichtung aus verschiedenartigen Komponenten zusammengestellt werden kann. Da aufgrund des zentralen Schwenkrahmens, an dem sämtliche Komponenten übereinander angeordnet sind, sind diese gegeneinander auch austauschbar. So können im oberen Teil Vorratsbehälter mit unterschiedlicher Höhe aufgesetzt werden, die den unterschiedlichen Vorratsbedarf der jeweiligen Schüttgüter und Dosiermenge entsprechen. Da unterhalb des Vorratsbehälters alle weiteren Dosierkomponenten höhenverstellbar und schwenkbar angeordnet werden können, kann direkt unter dem Vorratsbehälter als Zwischenteil sowohl ein separates Rührwerk, ein Zwischenbehälter, als auch Abschlußschieber vorgesehen werden. Da diese für verschiedene Schüttgutarten speziell ausgebildet sind, kann das optimale Rührwerk zu dem erforderlichen Vorratsbehälter als auch für das günstigste Dosierorgan ausgewählt werden. Dies bietet darüber hinaus auch für die Zukunft den Vorteil, daß auch Weiterentwicklungen z. B. am Dosierorgan gegenüber einer veralteten Ausführung nachrüstbar sind.

Die Erfindung wird anhand eines Ausführungsbeispiels, das in der Zeichnung dargestellt ist, näher erläutert. Es zeigen:
- Fig. 1: eine Dosiereinrichtung mit einem Rührwerk und einem Doppelschneckenförderer;
- Fig. 2: eine Differentialdosierwaage mit einem Zwischenbehälter und einem Doppelschneckenförderer;
- Fig. 3: eine Differentialdosierwaage mit einem Schwenkrahmen, der zwei Befestigungszylinder enthält.

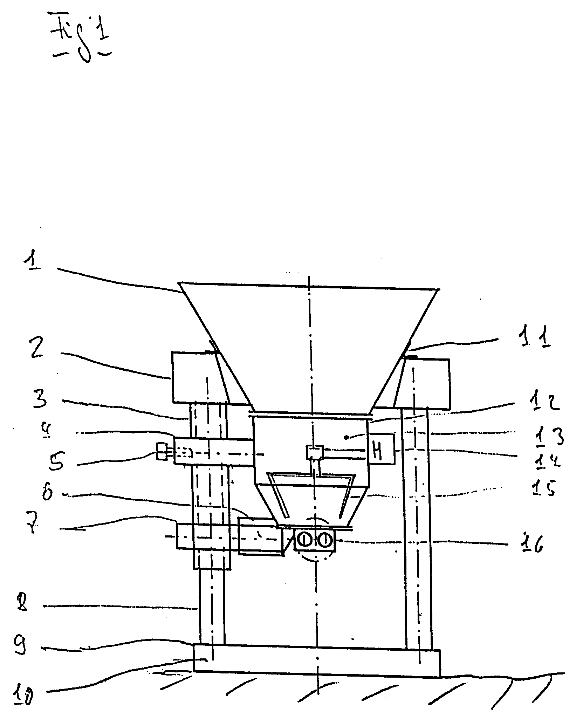

Die Fig. 1 der Zeichnung zeigt eine Dosiereinrichtung für Schüttgüter, die aus einem Vorratsbehälter 1, einem Rührwerk 13 und einem Doppelschneckenförderer 16 als Funktionsorgane besteht, die an einem Schwenkrahmen 2 befestigt sind, der auf einem Untergestell 9 abgestützt ist.

Die einzelnen Bestandteile der Dosiereinrichtung stellen separate Baueinheiten dar.

Der Schwenkrahmen 9 besteht aus einem horizontalen Rahmenteil, das in seiner Mitte eine Aussparung enthält, in der der Vorratsbehälter 1 angeordnet ist. An dem horizontalen Rahmenteil ist an der linken Seite vertikal nach unten ein Befestigungszylinder 3 angebracht. Der Schwenkrahmen 2 stützt sich auf ein Untergestell 9 ab, das auf dem Boden aufliegt. Das Untergestell 9 besteht aus einer Grundplatte 10 und zwei senkrecht nach oben gerichteten Stützen 8. Die Stützen 8 sind im oberen Teil fest mit dem horizontalen Teil des Schwenkrahmens 9 verbunden. Der Befestigungszylinder 3 ist rohrförmig ausgebildet und umschließt die linke Stütze 8 des Untergestells 9 koaxial. Dabei ist der Befestigungszylinder 3 nicht mit der linken Stütze des Untergestells 9 verbunden.

Der Vorratsbehälter 1 ist trichterförmig ausgebildet und ragt in die Öffnung des horizontalen Schwenkrahmenteils hinein. Dabei befinden sich am Umfang des Vorratsbehälters Winkelstücke 11, durch die der Vorratsbehälter 1 auf dem horizontalen Schwenkrahmenteil aufliegt. Unterhalb des Vorratsbehälters 1 ist ein Rührwerk 12 angeordnet, das mit einem ersten Schwenkarm 4 am Befestigungszylinder 3 angeordnet ist. Der erste Schwenkarm 4 enthält eine vertikale Bohrung, durch die der Befestigungszylinder 3 hindurchgeführt ist und durch die das Rührwerk 13 horizontal geschwenkt als auch vertikal verstellt werden kann. Im Bereich des Befestigungszylinders 3 ist der erste Schwenkarm noch mit Befestigungsmitteln 5 versehen, mit denen der erste Schwenkarm am Befestigungszylinder 3 befestigt werden kann.

Am ersten Befestigungsarm ist ein zylinderförmiges Gehäuse 12 als Rührwerksbehälter, in dem sich ein Rührwerksmechanismus 15 befindet, befestigt, das das Rührwerk 13 darstellt. Dieses befindet sich in seiner Einbaulage unmittelbar unter der Austragsöffnung des Vorratsbehälters 1. Der Rührwerksmechanismus besteht aus einem Motorantrieb 14, der über eine Antriebswelle und ein Winkelgetriebe einen Rührwerksflügel antreibt.

Unterhalb der Austragsöffnung des Rührwerksbehälters ist ein Doppelschneckenförderer 16 als Dosierorgan angeordnet. Dieses enthält einen zweiten Schwenkarm 7, der ebenfalls am Befestigungszylinder 3 angeordnet ist. Der Aufbau des zweiten Schwenkarms 7 entspricht im wesentlichen dem des ersten Schwenkarms 4, so daß auch das Dosierorgan horizontal seitlich geschwenkt und auch vertikal verstellt werden kann. Am zweiten Schwenkarm 7 ist zusätzlich noch der Antrieb 6 des Doppelschneckenförderers befestigt. Dieser ist ebenfalls mit dem zweiten Schwenkarm schwenkbar.

Bei einer derartigen Dosiereinrichtung könnte aber auch anstatt des Doppelschneckenförderers am Schwenkarm auch ein Schwingförderer oder ein Schneckenförderer mit einer Dosierschnecke oder Dosierspiralen angeordnet werden. Darüber hinaus wäre es auch denkbar, als Dosierorgan einen Förderbandförderer am zweiten Schwenkarm anzuordnen. Soweit es sich um Schüttgüter handelt, die aufgrund ihrer Beschaffenheit kein Rührwerk erfordern, so könnte diese Baueinheit bei einem anderen Ausführungsbeispiel eingespart werden. Dazu könnte das Dosierorgan unmittelbar unter dem Vorratsbehälter am Befestigungszylinder angeordnet werden. Anstatt der Rührwerksbaugruppe könnte aber auch eine Zwischenbehälterbaugruppe eingefügt werden, die die Vorratsmenge des dosierbaren Schüttgutes erhöht und zur besseren Dosierung unter Umständen noch Leitmittel enthält.

Zur Erhöhung der Vorratsmenge könnte allerdings auch ein höherer Vorratsbehälter auf den horizontalen Teil des Schwenkrahmens aufgesetzt werden. Dies wäre dann auch möglich, ohne daß die Rührwerksbaugruppe 13 und das Dosierorgan 16 in seiner Einbaulage verändert werden müßte.

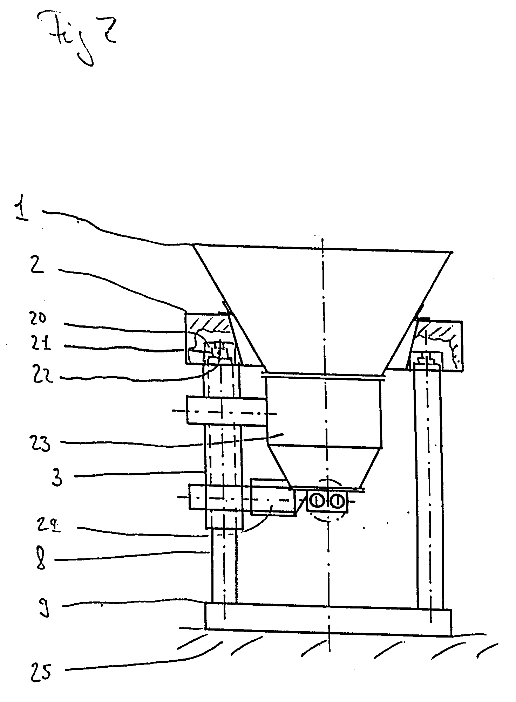

Die Fig. 2 der Zeichnung zeigt eine Dosiereinrichtung als Differentialdosierwaage, die im wesentlichen den gleichen Aufbau aufweist wie die Dosiereinrichtung nach Fig. 1 der Zeichnung. Die gleichartigen Bauteile sind deshalb auch mit den gleichen Bezugsziffern gekennzeichnet.

Die Differentialdosierwaage besteht aus einem Vorratsbehälter 1, einem Zwischenbehälter 23, einem Dosierorgan 24, einem Schwenkrahmen 2, einem Untergestell 9 und einer zwischen dem Schwenkrahmen 2 und dem Untergestell 9 angeordneten Wiegevorrichtung 22. Die Wiegevorrichtung 22 besteht aus mindestens zwei gleichartigen Wägezellen 21, die zwischen dem Untergestell 9 und dem horizontalen Teil des Schwenkrahmens angeordnet sind. Dabei befinden sich in dem horizontalen Teil des Schwenkrahmens zwei nach unten gerichtete Bohrungen 20, in die die Stützen 8 des Untergestells hineinragen. Die Bohrungen 20 sind dabei so bemessen, daß deren Durchmesser größer ist als der Durchmesser der Stützen 8, so daß keine Berührung zwischen dem Schwenkrahmen 2 und den Stützen 8 vorhanden ist. Auf den beiden Stützen 8 sind zwei Wägezellen 21 angeordnet, auf die sich der Schwenkrahmen 2 abstützt.

Der Befestigungszylinder 3 ist fest mit dem horizontalen Teil des Schwenkrahmens verbunden und stellt mit diesem eine Baueinheit dar. Dabei befindet sich die linke Stütze des Untergestells 9 koaxial in dem rohrförmigen Befestigungszylinder 3. Der Befestigungszylinder 3 ist in seiner axialen Länge kürzer als die beiden Stützen 8 und in seiner lichten Weite größer als der Durchmesser der linken Stütze, so daß keine unmittelbare kraftschlüssige Verbindung zwischen der linken Stütze und dem Befestigungszylinder 3 besteht. Dadurch wird eine Verwiegung sämtlicher am Befestigungszylinder 3 befindlicher Baueinheiten erreicht. Da die Wägeeinrichtung nach dem bekannten Differentialwägeverfahren arbeitet, hat ein Austausch von gewichtsunterschiedlichen Funktionsorganen am Schwenkrahmen 2 auch keinen Einfluß auf die Feststellung der Förderstärke der Dosiereinrichtung.

Bei einem anderen Ausführungsbeispiel einer derartigen Differentialdosierwaage könnten die Wägezellen auch unmittelbar zwischen dem Untergestell 9 und dem Aufstellgrund 25 angeordnet sein. Dann würde das Untergestell 9 ein Teil des Schwenkrahmens 2 darstellen. Die Schwenkarme 9, 7 für die einzelnen Funktionsorgane 23, 24 könnten dann direkt an den Stützen 8 befestigt werden.

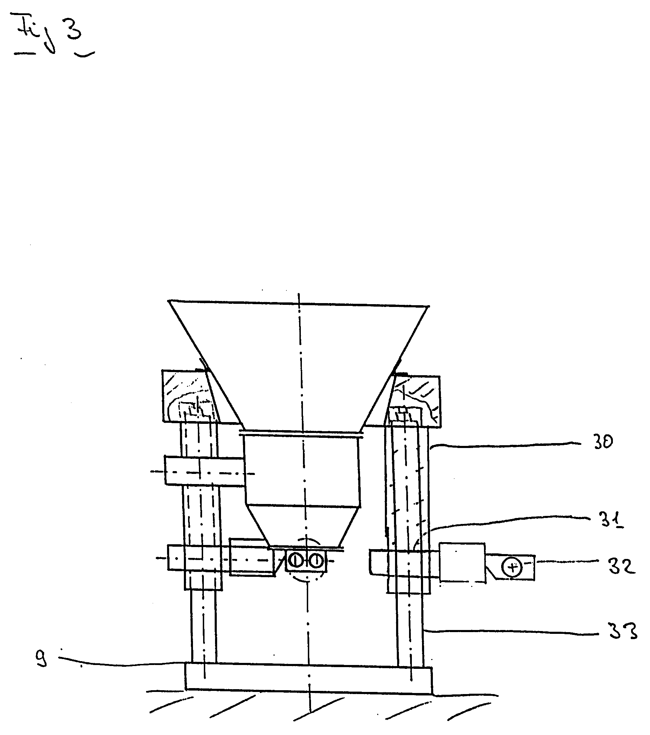

Die Fig. 3 der Zeichnung stellt eine Differentialdosierwaage dar, die im wesentlichen der Differentialdosierwaage nach Fig. 2 der Zeichnung entspricht. Diese enthält allerdings zusätzlich einen zweiten Befestigungszylinder 30, der koaxial zur linken Stütze 33 des Untergestells 9 angeordnet ist. Dabei ist der zweite Befestigungszylinder 30 so ausgebildet, wie der Befestigungszylinder 3 nach der Fig. 1 der Zeichnung. Er dient vorzugsweise dazu, zusätzliche Funktionsorgane einer Differentialdosierwaage aufzunehmen, die kurzfristig in einen laufenden Produktionsprozeß eingeführt werden müssen. Deshalb ist an dem zweiten Befestigungszylinder 30 ein zusätzliches Dosierorgan 32 angeordnet, das als ein Dosierförderer mit einer Dosierschnecke ausgebildet ist. Dies gestattet durch einen einfachen Schwenkvorgang den Austausch eines Dosierorgans, was in allerkürzester Zeit durchgeführt werden kann, ohne daß aufwendige Montagearbeiten notwendig sind. An diesem zweiten Befestigungszylinder 30 könnten auch zusätzliche Rührwerke oder ein Schwingförderer als Dosierorgan vorgesehen werden. Durch eine derartige Anordnung von zwei Befestigungszylindern ist aus örtlichen Gründen auch eine wahlweise Anordnung der Funktionsorgane am linken oder am zweiten Befestigungszylinder möglich.

Die vorstehenden Dosiereinrichtungen können sowohl für gravimetrische, volumetrische oder zeitliche Dosierverfahren eingesetzt werden.

Die nach den Figuren 1 bis 3 beschriebenen Dosiereinrichtungen können prinzipiell auch für dosierbare Flüssigkeiten verwendet werden. Als Funktionsorgane einer derartigen Dosiereinrichtung sind ebenfalls Vorratsbehälter, Zwischenbehälter, Rührwerke und Dosierorgane erforderlich. Dabei sind allerdings die Dosierorgane als Pumpen ausgebildet, die über Düsen die Flüssigkeiten austragen.

## Patentansprüche

1. Dosiereinrichtung, bei der als Baueinheit mindestens ein Vorratsbehälter (1), ein Dosierorgan (16, 32) und ein Rahmen zur Aufnahme dieser (1, 16, 32) und weiterer Funktionsorgane (13, 23) vorgesehen ist, dadurch gekennzeichnet, daß der Rahmen als Schwenkrahmen (2) ausgebildet ist, der aus mindestens einem horizontalen Rahmenteil und mindestens einem vertikalen Rahmenteil besteht, die fest miteinander verbunden sind und eine Baueinheit bilden, an dem alle Funktionsorgane (1, 13, 16, 23, 32) angeordnet sind, wobei mindestens ein Funktionsorgan horizontal seitlich um ein Schwenkrahmenteil (3) schwenkbar ist.

2. Dosiereinrichtung nach Anspruch 1, dadurch gekennzeichnet, daß der vertikale Schwenkrahmenteil so ausgebildet ist, daß er eine Drehachse darstellt, um die mindestens eine der vorhandenen Funktionsorgane horizontal seitlich schwenkbar ist.

3. Dosiereinrichtung nach Anspruch 1 oder 2, dadurch gekennzeichnet, daß der vertikale Teil des Schwenkrahmens als Befestigungszylinder (3) ausgebildet ist und daß wenigstens ein Funktionsorgan (1, 13, 16, 23, 32) über einen Schwenkarm (4, 7) an dem zylindrischen Teil befestigt ist.

4. Dosiereinrichtung nach wenigstens einem der vorhergehenden Ansprüche, dadurch gekennzeichnet, daß als Funktionsorgan der Dosiereinrichtung der Vorratsbehälter (1), Zwischenbehälter (23), Rührwerke (13), sowie als Dosierorgane Schneckenförderer (32), Doppelschneckenförderer (16), Schwingförderer oder Bandförderer vorgesehen sind.

5. Dosiereinrichtung nach einem der vorhergehenden Ansprüche, dadurch gekennzeichnet, daß die einzelnen Funktionsorgane (1, 13, 16, 32, 23) der Dosiereinrichtung vertikal übereinander angeordnet sind, wobei wenigstens ein Funktionsorgan (1, 13, 16, 32, 23) horizontal seitlich verschwenkbar ist.

6. Dosiereinrichtung nach einem der vorhergehenden Ansprüche, dadurch gekennzeichnet, daß einzelne Funktionsorgane durch Schwenkarme (4, 7, 31) so mit dem Befestigungszylinder (3, 30) verbunden sind, daß sie sowohl ganz oder zum Teil um diesen horizontal schwenkbar als auch vertikal verstellbar sind.

7. Dosiereinrichtung nach einem der vorhergehenden Ansprüche, dadurch gekennzeichnet, daß die Dosiereinrichtung als Differentialdosierwaage ausgebildet ist, wobei der Befestigungszylinder (3, 30) rohrförmig ausgebildet ist und zur koaxialen Aufnahme einer Abstützung (8, 33) dient, und bei der sich der Schwenkrahmen (2) über Wägezellen (21) auf der Abstützung (8, 33) abstützt.

8. Dosiereinrichtung nach Anspruch 7, dadurch gekennzeichnet, daß die Abstützung (8, 33) aus einem Untergestell (9) mit mindestens einer vertikalen Stütze (8, 33) besteht, die nur über die Wägezellen (21) eine kraftschlüssige Verbindung mit dem Schwenkrahmen (2) bilden.

9. Dosiereinrichtung nach Anspruch 7 oder 8, dadurch gekennzeichnet, daß das Untergestell (9) so ausgebildet ist, daß das Untergestell (9) einen Teil des Schwenkrahmens (2) darstellt, wobei die Wägeeinrichtung zwischen dem Untergestell (9) und einem Aufstellgrund (25) angeordnet ist.

10. Dosiereinrichtung nach wenigstens einem der vorhergehenden Ansprüche, dadurch gekennzeichnet, daß der Schwenkrahmen (2) so ausgebildet ist, daß ein oder mehrere Befestigungszylinder (3, 30) vorgesehen sind, wobei die einzelnen Funktionsorgane (13, 16, 23, 32) zum Teil wahlweise an einem der Befestigungszylinder anbringbar sind.

## Claims

1. Dosing device, in which there is provided as a structural unit at least one storage container (1), a dosing element (16, 32) and a frame for receiving the above (1, 16, 32) and further operating elements (13, 23), characterized in that the frame takes the form of a swivel frame (2), which comprises at least one horizontal frame part and at least one vertical frame part, which are firmly connected to one another and form a structural unit, and on which all of the operating elements (1, 13, 16, 23, 32) are disposed, at least one operating element being capable of swivelling horizontally laterally about a swivel frame part (3).

2. Dosing device according to claim 1, characterized in that the vertical swivel frame part is so designed that it represents an axis of rotation, about which at least one of the provided operating elements is capable of swivelling horizontally to the side.

3. Dosing device according to claim 1 or 2, characterized in that the vertical part of the swivel frame takes the form of a fastening cylinder (3) and that at least one operating element (1, 13, 16, 23, 32) is fastened by a swivel arm (4, 7) to the cylindrical part.

4. Dosing device according to at least one of the preceding claims, characterized in that the storage container (1), intermediate container (23) and agitators (13) are provided as an operating element of the dosing device, and screw conveyor (32), double screw conveyor (16), vibrating conveyors or belt conveyors are provided as dosing elements.

5. Dosing device according to one of the preceding claims, characterized in that the individual operating elements (1, 13, 16, 32, 23) of the dosing device are disposed vertically one above the other, at least one operating element (1, 13, 16, 32, 23) being capable of swivelling horizontally to the side.

6. Dosing device according to one of the preceding claims, characterized in that individual operating elements are connected by swivel arms (4, 7, 31) in such a manner to the fastening cylinder (3, 30) that they are both capable of swivelling in whole or in part horizontally about said fastening cylinder and vertically adjustable.

7. Dosing device according to one of the preceding claims, characterized in that the dosing device takes the form of a differential dosing balance, the fastening cylinder (3, 30) being tubular and being used for coaxially receiving a supporting device (8, 33), and in which the swivel frame (2) is supported via weighing cells (21) on the supporting device (8, 33).

8. Dosing device according to claim 7, characterized in that the supporting device (8, 33) comprises an underframe (9) having at least one vertical support (8, 33), which form a friction-locking connection with the swivel frame (2) only via the weighing cells (21).

9. Posing device according to claim 7 or 8, characterized in that the underframe (9) is so designed that the underframe (9) is a part of the swivel frame (2), the weighing device being disposed between the underframe (9) and an installation base (25).

10. Dosing device according to at least one of the preceding claims, characterized in that the swivel frame (2) is so designed that one or more fastening cylinders (3, 30) are provided, the individual operating elements (13, 16, 23, 32) in part being selectively mountable on one of the fastening cylinders.

## Revendications

1. Dispositif de dosage, dans lequel il est prévu comme unité de construction au moins un réservoir (1), un organe de dosage (16, 32) et un cadre pour loger cet organe fonctionnel (1, 16, 32) et d'autres organes fonctionnels (13, 23), caractérisé en ce que le cadre est conçu en tant que cadre pivotant (2), qui est constitué d'au moins une partie horizontale et d'au moins une partie verticale, qui sont assemblées fixement entre elles et forment une unité de construction, sur laquelle sont placés tous les organes fonctionnels (1, 13, 16, 23, 32), un organe fonctionnel au moins pouvant pivoter horizontalement sur le côté, autour d'une partie (3) du cadre pivotant.

2. Dispositif de dosage selon la revendication 1, caractérisé en ce que la partie verticale du cadre pivotant est conçue de manière à constituer un axe de rotation, autour duquel peut pivoter horizontalement sur le côté, au moins l'un des organes fonctionnels existants.

3. Dispositif de dosage selon la revendication 1 ou 2, caractérisé en ce que la partie verticale du cadre pivotant est conformée en cylindre de fixation (3) et en ce qu'au moins un organe fonctionnel (1, 13, 16, 23, 32) est fixé sur la partie cylindrique, par l'intermédiaire d'un bras pivotant (4, 7).

4. Dispositif de dosage selon l'une au moins des revendications précédentes, caractérisé en ce que sont prévus comme organes fonctionnels du dispositif de dosage, le réservoir (1), des réservoirs intermédiaires (23), des agitateurs (13), ainsi que comme organes de dosage, des transporteurs à vis sans fin (32), des transporteurs à double vis sans fin (16), des transporteurs oscillants ou des transporteurs à bande.

5. Dispositif de dosage selon l'une des revendications précédentes, caractérisé en ce que les organes fonctionnels individuels (1, 13, 16, 32, 23) du dispositif de dosage sont superposés verticalement, un organe fonctionnel (1, 13, 16, 32, 23) au moins pouvant pivoter horizontalement sur le côté.

6. Dispositif de dosage selon l'une des revendications précédentes, caractérisé en ce que des organes fonctionnels individuels sont reliés par des bras pivotants (4, 7, 31) avec le cylindre de fixation (3, 30), de manière qu'ils puisse pivoter horizontalement totalement ou en partie autour de celui-ci, et être déplaçables aussi verticalement.

7. Dispositif de dosage selon l'une des revendications précédentes, caractérisé en ce que le dispositif de dosage est conformé en balance de dosage différentielle, le cylindre de fixation (3, 30) étant tubulaire et servant au logement coaxial d'un appui (8, 33), et le cadre pivotant (2) prenant appui sur l'appui (8, 33), par des cellules de pesée (21).

8. Dispositif de dosage selon la revendication 7, caractérisé en ce que l'appui (8, 33) est constitué d'un châssis (9) avec au moins un appui vertical (8, 33), qui forment, uniquement par les cellules de pesée (21), une liaison par force avec le cadre pivotant (2).

9. Dispositif de dosage selon la revendication 7 ou 8, caractérisé en ce que le châssis (9) est conçu de manière qu'il constitue une partie du cadre pivotant (2), le dispositif de pesée étant placé entre le châssis (9) et une base de montage (25).

10. Dispositif de dosage selon l'une au moins des revendications précédentes, caractérisé en ce que le cadre pivotant (2) est conçu de manière que sont prévus un ou plusieurs cylindres de fixation (3, 30), les organes fonctionnels (13, 16, 23, 32) individuels pouvant être appliqués en partie au choix sur l'un des cylindres de fixation.
